# EUROPEAN PATENT APPLICATION

(11) **EP 1 816 326 A1**
(43) Date of publication of application: **08.08.2007**
(21) Application number: 07002137.3
(22) Date of filing: 31.01.2007
(51) Int. Cl.: F02B 37/04, F02B 37/12, F02B 37/24, F02B 39/10

(54) **Control of supercharged engine with variable geometry turbocharger and electric supercharger**

(30) Priority: 03.02.2006 JP 2006027282
(71) Applicant: Mazda Motor Corporation, Aki-gun, Hiroshima 730-8670 (JP)
(72) Inventor: Yamagata, Naoyuki, Fuchu-cho, Aki-gun, Hiroshima 730-8670 (JP)
(74) Representative: Müller-Boré & Partner Patentanwälte

(57) **Abstract**

There is provided a method of controlling a supercharging system (200) capable of pumping intake air to an internal combustion engine (1) with first and second pumping capacities and having a turbine (211) which receives engine exhaust gas through flow restriction and generates the first pumping capacity. The method comprises reducing the flow restriction and increasing the second pumping capacity as a desired intake airflow of the engine increases. By reducing the flow restriction, such as increasing nozzle (217) opening of a variable geometry turbine (VGT), as desired intake airflow of the engine increases, such as when the engine speed increases, an excessively high pressure in the exhaust passage may be prevented. Therefore, the residual gas in the combustion chamber may be decreased so that the knocking may be prevented without retarding the ignition timing or enriching the air-fuel ratio while more air is charged into the engine.

## Description

The present description relates to supercharged engines, and more particularly to control of supercharged engine with a variable geometry turbocharger (VGT) and an electric supercharger (ESC).

It is known to turbo-charge an internal combustion engine. The turbocharger generally comprises a turbine that is coupled to a compressor. Exhaust gases drive the turbine and cause the compressor to rotate, thereby pumping air to the engine. Engine output torque can be increased when the amount of fuel delivered to the engine is increased in accordance with the increase in fresh air that is provided by the turbocharger. However, when the engine speed is relatively low, operational efficiency of the compressor may be reduced due to lower exhaust gas flow rates. As a result, the desired engine output torque may not be sufficiently obtained.

To address this issue, there is known and presented, for example, in U.S. Patent No. 6,637,205, a turbocharger with a variable geometry turbine (VGT). It comprises adjustable vanes to control the flow of exhaust gas across nozzles and through the turbine. When the engine speed is lower, for example, the vanes may be adjusted to control the nozzles to open less, thereby increasing the exhaust gas flow rate and the turbine efficiency. The supercharging system of the '205 patent further comprises an electric motor that assists the turbocharger compressor to improve the turbocharger's air pumping capacity at lower engine speeds.

According to the method described in the '205 patent, even operating at the lower engine speed condition, the engine inducted air amount may be increased to improve engine torque. However, at lower engine speeds, the VGT nozzle position can increase the exhaust manifold backpressure. This can reduce exhaust flow from the cylinder to the exhaust manifold during the intake and exhaust valve overlap period, when intake and exhaust valves are simultaneously open. Consequently, residual gas may increase within the combustion chamber and may raise the combustion chamber temperature. As a result, engine knocking can occur (i.e. auto-combustion of cylinder gases can occur). Engine knock can be reduced by retarding spark timing, but at the expense of engine torque and efficiency. Alternatively, engine knock can be reduced by enriching the engine air-fuel mixture, but then fuel economy is reduced.

Accordingly, it is an object of the present invention to allow a controlling of a supercharged engine to improve its performance characteristics, in particular to allow it to output more torque without degrading the engine fuel economy

This object is solved according to the invention by the features of the independent claims. Preferred embodiments of the invention are subject of the dependent claims.

According to the invention there is provided a method of controlling a supercharging system capable of pumping intake air to an internal combustion engine with first and second pumping capacities and having a turbine which receives engine exhaust gas through flow restriction and generates at least the first pumping capacity. The method comprises reducing the flow restriction and increasing the second pumping capacity as a desired intake airflow of the engine increases.

According to the method, by reducing the flow restriction as a desired intake airflow of the engine increases, an excessively high pressure in the exhaust passage may be prevented. Therefore, the residual gas in the combustion chamber may be decreased so that the knocking may be prevented without retarding the spark timing or enriching the air-fuel mixture. At the same time, by increasing the second pumping capacity, desired amount of the intake air may be charged into the engine even when the flow restriction is decreased and the turbine efficiency may be decreased accordingly. Consequently, the engine can output more torque without degrading the engine fuel economy.

According to a preferred embodiment of the invention, said flow restriction is decreased by opening a nozzle arranged upstream of a turbine wheel of said turbine.

Preferably, said nozzle is closed to increase flow rate of the exhaust gas through said turbine wheel.

Further preferably, a first compressor has said first pumping capacity, said first compressor being driven by said turbine and arranged in an intake passage of said engine.

Still further preferably, said second pumping capacity being generated by an electric motor preferably by means of a second compressor, being further preferably arranged in an intake passage of said engine. Further preferably, the second compressor has said second pumping capacity, said second compressor being driven by the electric motor and arranged in an intake passage of said engine.

Further preferably, said second pumping capacity is reduced by decreasing electricity supplied to said electric motor.

Still further preferably, the method further comprises reducing said flow restriction and increasing said second pumping capacity as a speed of said engine increases.

Further preferably, the method further comprises increasing said flow restriction as a desired torque of said engine increases.

Most preferably, the method further comprises increasing said second pumping capacity as desired torque of said engine increases.

According to a further preferred embodiment of the invention, a second compressor has said second pumping capacity, said second compressor being driven with electricity and arranged in an intake passage of said engine.

Preferably, the method further comprises increasing said flow restriction as a desired torque of said engine increases.

Further preferably, the method further comprises increasing said second pumping capacity as desired torque of said engine increases.

According to a further preferred embodiment of the invention, there is further provided a method of controlling a supercharging system capable of pumping intake air to an internal combustion engine with first and second pumping capacities and having a turbine which receives engine exhaust gas through flow restriction and generates said first pumping capacity, comprising: reducing said flow restriction and increasing said second pumping capacity as a speed of said engine increases.

Preferably, said flow restriction is decreased by opening a nozzle upstream of a turbine wheel of said turbine.

Further preferably, the method further comprises closing said nozzle thereby increasing flow rate of the exhaust gas through said turbine.

Still further preferably, a first compressor has said first pumping capacity, said first compressor being driven by said turbine and arranged in an intake passage of said engine.

Further preferably, a second compressor has said second pumping capacity, said second compressor being driven by an electric motor and arranged in an intake passage of said engine.

Still further preferably, said second pumping capacity is reduced by decreasing electricity supplied to said electric motor.

Most preferably, the method further comprises increasing said flow restriction and said second power as a desired torque of said engine increases.

According to the invention, there is further provided a computer program product, in particular embodied in a computer-readable storage medium or as a signal, comprising computer readable instructions which, when loaded and executed on a suitable system performs the steps of a method for controlling a supercharging system according to the invention or a preferred embodiment thereof.

According to the invention, there is further provided a supercharging system for an internal combustion engine, comprising:
a turbine arranged in an exhaust passage of said engine;
a nozzle arranged between said engine and said turbine in said exhaust passage;
an electric power source for an electric motor;
a compressor arranged in an intake air passage of said engine and driven by said turbine and/or said electric motor; and
a controller configured to control said nozzle to more open and said electric power source to supply more electricity to said electric motor as a desired airflow of said engine increases.

According to a preferred embodiment of the invention, said compressor comprises a first compressor driven by said turbine and a second compressor driven by said electric motor.

Preferably, said first compressor is arranged upstream of said second compressor in said intake air passage.

Further preferably, said first compressor is arranged downstream of said second compressor in said intake air passage.

In a second aspect of the present description, a method comprises reducing the flow restriction and increasing the second pumping capacity as a speed of said engine increases. The method according to the second aspect of the present description can achieve the same advantage as the method according to the first aspect since the desired intake airflow increases as the engine speed increases. In other words, engine can output more torque output without degrading the engine fuel economy.

The flow restriction may be a nozzle between vanes which are arranged around a turbine wheel and positions of which can be adjusted. The reduced flow restriction may decrease the first pumping capacity of the supercharging system. The first pumping capacity may be a pumping capacity of a first compressor operationally coupled to the turbine. The second pumping capacity may be increased by increasing electricity supplied to an electric motor operationally coupled to a second compressor.

The advantages described herein will be more fully understood by reading an example of embodiments in which the above aspects are used to advantage, referred to herein as the Detailed Description, with reference to the drawings. It should be understood that even though embodiments are separately described, single features thereof may be combined to additional embodiments.
Figure 1 is a schematic view showing an engine system according to a first embodiment of the present description;
Figure 2 is a more detailed diagram showing the engine system according to the first embodiment;
Figure 3 shows a sectional view of a turbine of a turbocharger of the engine system according to the first embodiment;
Figure 4 shows a flowchart illustrating a control routine of a supercharging system of the engine system according to the first embodiment;
Figure 5 shows control maps used in the control routine shown in Figure 4;
Figure 6 is a diagram showing operating regions of the engine system according to the first embodiment;
Figure 7 shows graphs of intake manifold pressure and exhaust manifold pressure for engine systems in accordance with the first embodiment and first and second comparative examples;
Figure 8 shows graphs of maximum torque curves for engine systems in accordance with the first embodiment, a second embodiment and the first and second comparative examples; and
Figure 9 is a schematic view of the engine system in accordance with the second embodiment of the present description.

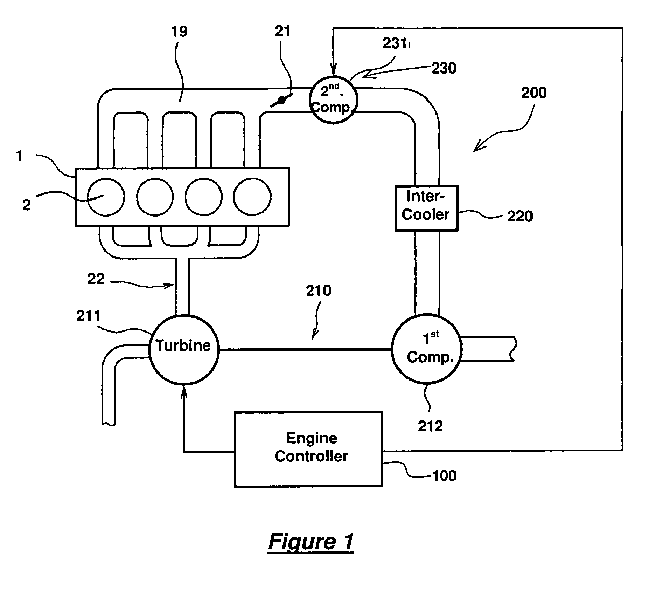

A preferred embodiment of the present description will now be described with reference to the drawings, starting with Figure 1, which shows a schematic view of an engine system mounted on a vehicle, such as an automotive vehicle, and its output is transmitted to vehicle driving wheels through a power transmission mechanism as is well known in the art. The engine system comprises an internal combustion engine 1, and an engine controller 100 that controls the engine 1 and a supercharging system 200.

The supercharging system 200 preferably comprises a turbocharger 210, an intercooler 220 and a supercharger, preferably an electrically driven supercharger (electric supercharger) 230. The turbocharger 210 comprises a turbine 211, and a first compressor 212 preferably connected to each other and rotating together. The turbine 211 is arranged in or at an exhaust passage of the engine 1, and is rotated by the engine exhaust gas (i.e. by energy of the engine exhaust gas) thereby driving the first compressor 212, which in turn compresses intake air. The first compressor 212, the intercooler 220 and a second compressor 231, a part of the (preferably electric) supercharger 230, are arranged from the upstream to the downstream of the engine intake airflow. The hot air compressed at or by the compressor 212 flows through the intercooler 220 thereby cooling down, and gets into the second compressor 231, where the intake air may be further compressed if necessary. Finally, it is charged into the engine 1. Therefore, the supercharging system 200 preferably has a total pumping capacity consisting of a first pumping capacity generated by the first compressor 212 and a second pumping capacity generated by the second compressor 231.

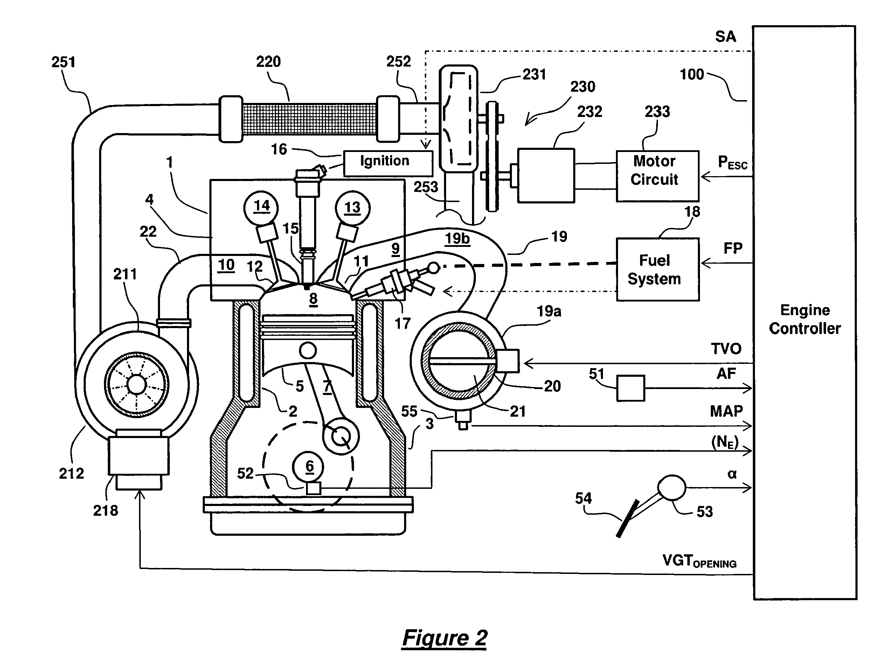

The internal combustion engine 1 has, in the present embodiment, four cylinders 2 as shown in Figure 1, although it may have any number of cylinders. Referring to Figure 2, the engine 1 comprises a cylinder block 3, and a cylinder head 4, which is arranged on the cylinder block 3. The cylinder 2 accommodates a piston 5 which slides or reciprocates therein. The cylinder block 3 rotationally supports a crankshaft 6 using journals, bearings and the like. Further, a connecting rod 7 links the crankshaft 6 and the piston 5. The cylinder head 4, the cylinder 2, and the piston 5 collectively form a combustion chamber 8 inside.

Although only one is illustrated in Figure 2, one or more, preferably two intake ports 9 are formed in the cylinder head 4, and respectively open to the combustion chamber 8. Likewise, one or more, preferably two exhaust ports 10 are formed in the cylinder head 4, and respectively open to the combustion chamber 8. One or more intake valves 11 and one or more exhaust valves 12 are respectively capable of respectively shutting the intake ports 9 and the exhaust ports 10 from the combustion chamber 8 as shown in Figure 2. Camshafts 13 and 14 are driven by the crankshaft 6 through a camshaft drive mechanism not shown, for example a chain-sprocket mechanism. They cause each of the valves 11 and 12 to make reciprocating movement at desired timing.

At least one spark plug 15 for the each cylinder 2 is mounted to or at least partly in the cylinder head 4 e.g. by threading. An ignition circuit or system 16 receives a control signal SA from an engine controller 100, and provides electric current to the spark plug(s) 15 so that it make(s) a spark at the plug gap in the combustion chamber 8 substantially at desired (predetermined or predeterminable) ignition timing. When the engine 1 is a compression ignition engine such as a diesel engine, the spark plug 15 and the ignition circuit may be eliminated or omitted. In the case of the compression ignition engine, engine knocking can not occur. Instead there may be a possibility of pre-ignition of the air-fuel mixture in the combustion chamber 8 which occurs earlier than the desired ignition timing particularly when the mixture temperature is extremely high.

For the each cylinder 2, a fuel injector 17 is mounted to the cylinder head 4 preferably at one side of a cylinder center axis in a known manner such as using a mounting bracket. At least a tip end of the injector 17 projects into or faces the inside of the combustion chamber 8 from a space preferably vertically below and/or horizontally between the two intake ports 9. A fuel supply system 18 preferably includes a high pressure pump and an injector driver circuit not shown, and supplies fuel, in this case gasoline, from a fuel tank not shown. Also, the fuel supply system 18, particularly an injector driver circuit therein, activates the injector 17, preferably a solenoid of the injector 17, to open the spray nozzles in accordance with a control signal FP from the engine controller 100, in order to inject desired (predetermined or predeterminable) amount of fuel at desired (predetermined or predeterminable) timing. The fuel is not limited to the gasoline, but may be any fuel including ethanol and hydrogen particularly as far as it can be ignited by the spark from the spark plug 15. The injector 17 is not limited to being arranged to directly inject fuel into the combustion chamber 8, but it may be arranged to inject fuel at least partly into the intake port 9. In the case of the compression ignition engine, the fuel may be compression ignitable fuel such as diesel oil.

The intake ports 9 connect in fluid communication to a surge tank 19a through intake passages 19b of an intake manifold 19. Air flow(s) from a supercharging system 200, which will be described in greater detail, particularly from the second compressor 231 to the surge tank 19a through a throttle body 20, in which a throttle valve 21 is arranged. The throttle valve 21 preferably pivots and/or regulates airflow to the surge tank 19a. A throttle actuator 21a adjusts an opening of the throttle valve 21 in accordance with a control signal TVO from the engine controller 100.

The exhaust ports 10 are connected to an exhaust manifold 22. The turbine 211 of the turbocharger 210 is connected to the exhaust manifold 22 and receives exhaust gas combusted in and expelled from the combustion chamber 8.

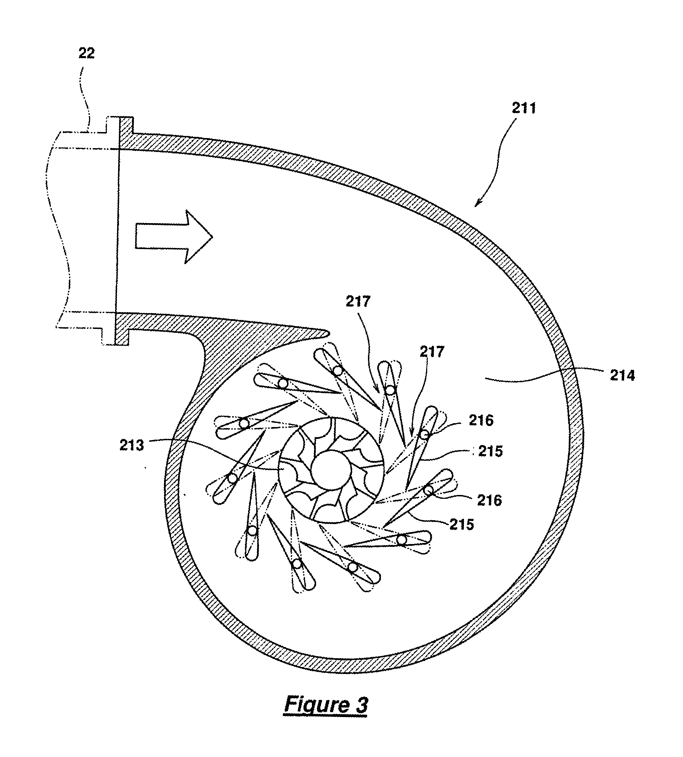

Referring to Figure 3, the turbine 211 preferably has a turbine wheel 213 in a turbine chamber 214. The engine exhaust gas at least partly flows into the turbine chamber 214, and is guided through (preferably adjustable) vanes 215 to the turbine wheel 213. The turbine wheel 213 is coupled coaxially with a compressor wheel of the compressor 212 so that the exhaust energy may be used to compress the intake air.

The vanes 215 preferably are pivoted around axes 216. The pivotal movement of the vanes 215 changes opening of a nozzle 217 formed between the neighboring vanes 215. Therefore, the turbine 211 may be called a variable geometry turbine (VGT). When the vanes 215 are caused to be closer to each other or oriented in a relatively circumferential direction as indicated by the solid line of Figure 3, the opening of the nozzle 217 is relatively small so that a flow rate of the exhaust gas is increased. In addition to the increased flow rate, the exhaust gas flow may tend to direct in a relatively circumferential or tangent direction of the turbine wheel 213 so that an efficiency of energy conversion from the exhaust gas flow to the rotational movement of the turbine wheel 213 may be increased. It is particularly useful when the flow of the exhaust gas is relatively small such as when an engine speed is lower, when the fuel injection amount FP is relatively small, or when the throttle valve 21 is relatively closed. At the same time, however, restriction of the exhaust gas flow at the nozzles 217 is increased.

On the other hand, the vanes 215 are caused to be further away from each other or closer to the radial direction of the turbine wheel, the opening of the nozzle 217 is larger so that an efficiency of energy conversion may be increased if the exhaust gas flow is greater such as when an engine speed is higher or when the throttle valve 21 is relatively opened. With the greater opening of the nozzles 217, the restriction of the exhaust gas flow is decreased and the back pressure of the exhaust gas or the pressure in the exhaust port 10 or the exhaust manifold 22 will be regulated.

Referring back to Figure 2, a variable geometry turbine (VGT) actuator 218 adjusts the geometry (particularly the inclination) of the vanes 215 of the compressor 211, and may be preferably a vacuum actuator and a link mechanism linking the vacuum actuator and the pivot axes 216 of the vanes 215 or any other actuator pertinent in the art. The VGT actuator 218 preferably is controlled in accordance with a signal VGT_{OPENING} from the engine controller 200 as described in greater detail below.

Air is inducted from an air intake and/or an air cleaner (not shown) into an intake side of the first compressor 212 or the compressor of the turbocharger 210. The first compressor 212 may be preferably a centrifugal compressor that inducts air from its center and pumps out substantially in the circumferential direction, or any other type of compressor pertinent in the art. The outlet of the turbocharger compressor 212 preferably is connected with the intercooler 212 in a fluid communication through a tube 251 that may be preferably made of rubber or any other material pertinent in the art.

The air compressed at the first compressor 212 is heated as well and decreases its density to the extent of the heating. Then, it is introduced through the intercooler 220 and cooled down to regain the density. The intercooler 220 may be preferably of an air-air type or any other type pertinent in the art. It is connected with the second compressor 231 or the compressor of the (preferably electric) supercharger 230 in a fluid communication through a tube 252 that may be preferably made of rubber or any other material pertinent in the art. An electric motor 232 preferably drives the second compressor 231. The engine control unit 200 controls a motor drive circuit 233 to drive the electric motor 232 in accordance with a signal P_{ESC}. The motor drive circuit 233 is connected to a vehicle electric power supply not shown such as a battery and/or an electric generator or alternator.

The second compressor 231 may be preferably a centrifugal compressor that inducts air from its center and pumps out substantially in the circumferential direction, or any other type of compressor pertinent in the art. The outlet of the second compressor 231 is connected with the inlet of the throttle body 20 in a fluid communication through a tube 253 that may be preferably made of rubber or any other material pertinent in the art.

The engine controller 100 preferably comprises a microcomputer based controller having a central processing unit which runs programs using data, memories, such as RAM and ROM, storing the programs and data, and input/output (I/O) bus inputting and outputting electric signals, as is well known in the art. The engine controller 200 receives signals from one or more various sensors including a signal AF from an air flow or mass meter 51 arranged in the air cleaner described above, a pulse signal from a crank angle sensor 52 based on which an engine speed N_{E} is computed, a signal α from an accelerator position sensor 53 detecting a position of an accelerator pedal 54, and/or a signal MAP from a pressure sensor 55 detecting a pressure in the intake manifold 19. Based on these one or more signals, the engine controller 200 computes and outputs one or more various control signals including the signal SA to the ignition system 16, the signal FP to the fuel system 18, the signal TVO to the throttle actuator 21a, the signal VGT_{OPENING} to the VGT actuator 218, and/or the signal ESC to the supercharger motor drive circuit 233.

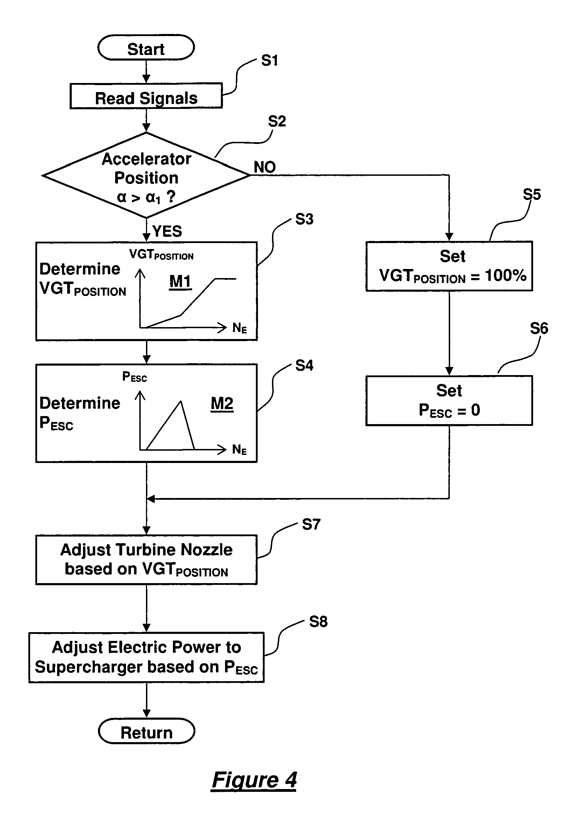

A control routine executed by the controller 100 for the supercharging system 200 will now be described with reference to a flow chart of Figure 4. After a start, the routine proceeds to a step S1, and the engine controller 100 reads the one or more input signals from the one or more various sensors described above. Then, the routine proceeds to a step S2, and determines whether or not a position α of the accelerator pedal 54 read from the accelerator position sensor 53 is greater than a predetermined or predeterminable value α₁, for example, about 50% of the full stroke of the pedal depression.

If it is determined at the step S2 that the accelerator position α is greater than α₁ (YES), the routine proceeds to a step S3, and computes a target opening VGT_{OPENING} of the nozzles 217 of the turbine 211 preferably based on the engine speed N_{E} with reference to a VGT_{OPENING} map or table or relationship M1 stored in the memory of the engine controller 100. Then, the routine proceeds to a step S4, and computes electric power P_{ESC} to be supplied to the electric motor 232 for the compressor 231 based on the engine speed N_{E} with reference to a P_{ESC} map or table or relationship M2 stored in the memory of the engine controller 200.

On the other hand, if it is determined at the step S2 that the position α is not greater than α₁ (NO), the routine proceeds to a step S5, and sets the target opening VGT_{OPENING} of the nozzles 217 of the turbine 211 to be the full opening or 100% or close thereto. Then, it proceeds to a step S6, and sets the electric power P_{ESC} to be supplied to the electric motor 232 for the second compressor 231 to be substantially zero.

After the step S4 or S6, the routine proceeds to a step S7, and adjusts the opening of the nozzles 217 of the turbine 211 to substantially be the target opening VGT_{OPENING} by the engine controller 200 outputting the signal VGT_{OPENING}, which is determined at the step S3 or S5, to the VGT actuator 218. Then, the routine proceeds to a step S8, and adjusts the supercharging with the (preferably electric) supercharger 230 preferably by the engine controller 200 outputting the signal P_{ESC}, which is determined at the step S4 or S6, to the motor drive circuit 233 for the electric supercharger 230.

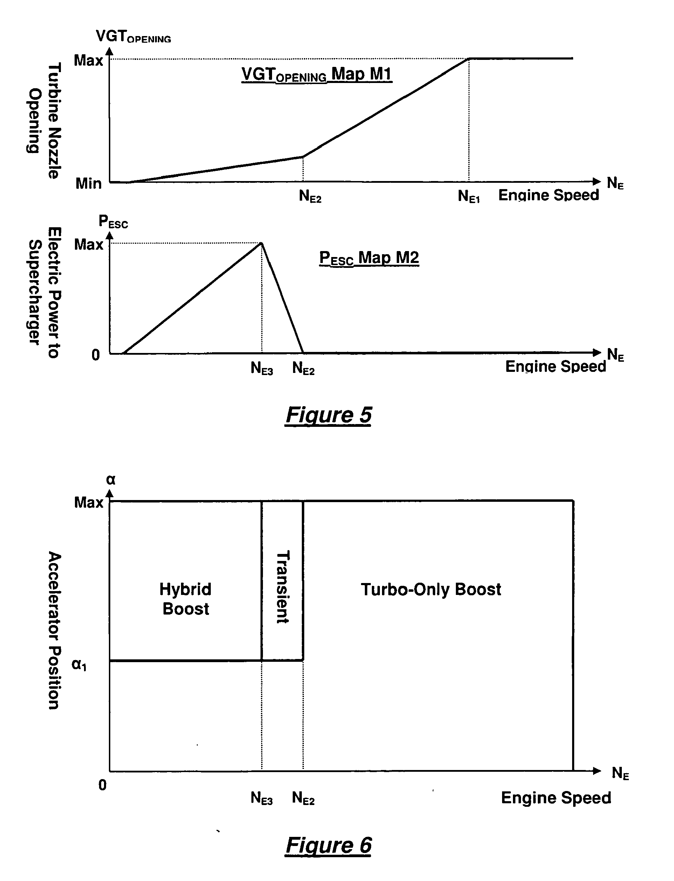

Figure 5 shows characteristics of the target opening VGT_{OPENING} of the nozzles 217 of the turbine 211 stored in the VGT_{OPENING} map or table or relationship M1 and the electric power P_{ESC} to be supplied to the electric compressor motor 232 stored in the P_{ESC} map or table or relationship M2. The target opening VGT_{OPENING} is set to substantially be a minimum value at a minimum engine speed, and then is set to be increased as the engine speed N_{E} increases until it reaches N_{E1}, for example about 5000 rpm. Below an engine speed N_{E2}, for example about 2500 rpm, which is below N_{E1}, the increasing rate of the opening VGT_{OPENING} is less than that at a speed between N_{E2} and N_{E1}. It should be understood that the characteristics of the target opening VGT_{OPENING} of the nozzles 217 of the turbine 211 stored in the VGT_{OPENING} map or table or relationship M1 and the electric power P_{ESC} to be supplied to the electric compressor motor 232 stored in the P_{ESC} map or table or relationship M² need not to follow exactly straight lines in the respective sections, but may have a different relationship having a first derivative different from a constant value in the respective portions (e.g. between the minimum engine speed and N_{E2}, between N_{E2} and N_{E1} etc.).

The electric power P_{ESC} substantially is set zero at the minimum engine speed, and then is set to be increased as the engine speed N_{E} increases until it reaches N_{E3}, for example about 2000 rpm, where it is set to be a maximum value. As the engine speed increases from N_{E2} to N_{E1}, the electric power P_{ESC} is set to be decreased from the maximum value to zero.

According to the control characteristics shown in Figure 5, at an engine speed lower than N_{E3}, the first compressor 221 and the second compressor 231 work together to boost intake air to the engine 1, as long as the accelerator position α is greater than α₁, as determined at the step S2 of Figure 4. Therefore, this engine operating region can be called a hybrid boost region as shown in Figure 6. Only the turbocharger compressor 221 works at an engine speed higher than N_{E2} (turbo-only boost region in Figure 6). Then, at an engine speed between N_{E2} and N_{E3} (transitional or transient region), still the both compressor 221 and 231 work, but the electric supercharger compressor 231 gradually decreases or reduces its output as the engine speed N_{E} increases and approaches N_{E2}, as long as the accelerator position α is greater than α₁, as determined at the step S2 of Figure 4. When the accelerator position α is not greater than α₁, the electric supercharger compressor 231 preferably does not work, and this engine operation region may be called a part of the turbo-only boost region as shown in Figure 6.

In the hybrid boost region of Figure 6, as can be seen from the VGT_{OPENING} map or table or relationship M1 shown in Figure 5, as the engine speed increases, in other words, as desired intake airflow to the engine 1 increases, the opening of the nozzles 217 of the turbine 211 of the turbocharger 210 is increased, and the flow restriction of the exhaust gas at the nozzles 217 is decreased, and the back pressure of the exhaust gas or the pressure in the exhaust port 10 or the exhaust manifold 22 will be regulated or controlled. At the substantially same time, the electric supercharger 230 has more pumping capacity because of the increased electricity P_{ESC} and further increases a pressure in the intake manifold 19 as the desired intake airflow to the engine 1 increases.

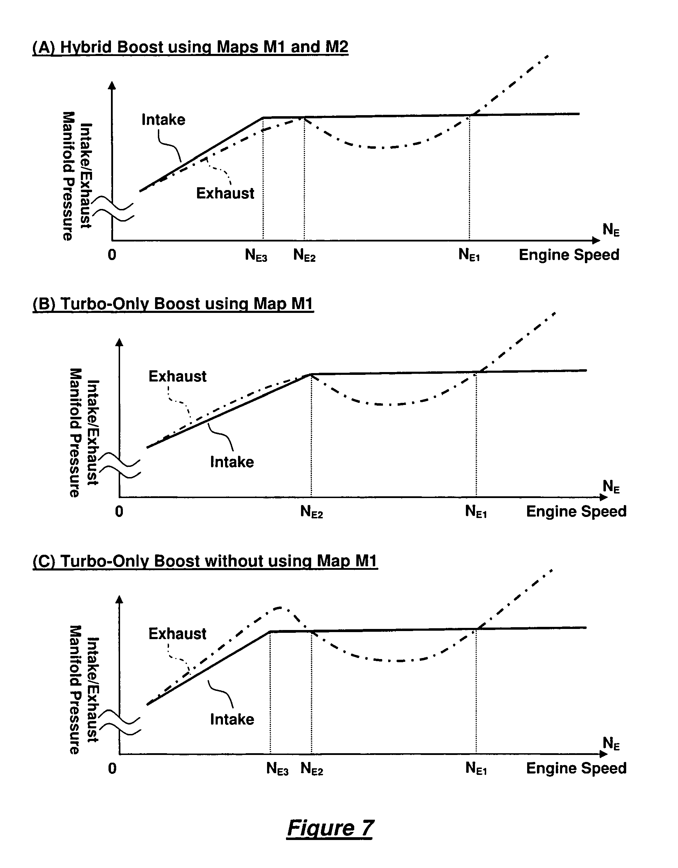

Figure 7 shows comparisons between the intake manifold pressure and the exhaust manifold pressure for the embodiment described above (A), a first comparative example (B) and a second comparative example (C). In the embodiment, the target opening VGT_{OPENING} of the nozzles 217 of the turbocharger compressor 211 and the electric power P_{ESC} for the electric supercharger 230 are set from an experiment so that, at least in the hybrid boost and transient regions shown in Figure 6, the intake manifold pressure is always greater than the exhaust manifold pressure, as shown in Figure 7A. Therefore, combusted gas can be sufficiently expelled from the combustion chamber 8 so that knocking caused by the residual gas in the combustion chamber 8 can be prevented.

In the comparative examples, the electric supercharger 230 is not used, but the only the turbocharger 210 is used. In the first comparative example, the VCT_{OPENING} map or table or relationship M1 of Figure 5 is used to adjust the opening of the nozzles 217 of the turbocharger compressor 211. As shown in Figure 7B, at an engine speed lower than N_{E2}, due to lack of boost by the electric supercharger 220, the intake manifold pressure is lower than that of the embodiment. Therefore, the same level of the output torque can not be obtained as in the embodiment. Also, the exhaust manifold pressure of the first comparative example is lower than that of the embodiment. But, the exhaust manifold pressure is slightly higher than the intake manifold pressure due to the lack of the boost by the electric supercharger 220.

In the second comparative example, the target opening VGT_{OPENING} of the nozzles 217 is set to be the minimum value at an engine speed below N_{E3}, and gradually is increased toward the maximum at N_{E1}. As shown in Figure 7C, at an engine speed lower than N_{E2}, due to the constant minimum opening of the nozzles 217, efficiency of the turbine 211 of the turbocharger 210 is relatively high so that the same level of intake manifold pressure as in the embodiment can be obtained. However, the exhaust manifold pressure is increased due to the minimum opening of the nozzles 217, and higher than the intake manifold pressure. Therefore, the residual gas is increased in the combustion chamber 8 so that the knocking may occur. Consequently, the ignition timing may need to be retarded or the fuel injection amount may need to be increased to avoid the knocking so that the output torque may be decreased and/or fuel economy may be deteriorated.

In the embodiment, when the desired output torque from the engine 1 is relatively low or the opening α of the accelerator pedal 54 is not greater than α₁ as determined in the step S2 of the control routine shown in Figure 4, the opening VCT_{OPENING} of the nozzles 217 of the turbine 211 is set to be the minimum at the step S5. Therefore, the flow restriction at the nozzles 217 is reduced, and operating efficiency of the engine 1 is improved. Alternatively, the VCT_{OPENING} may be set to continuously decrease as the desired output torque from the engine 1 increases.

Also when the desired output torque from the engine 1 is relatively low or the opening α of the accelerator pedal 54 is not greater than α₁ as determined in the step S2 of the control routine shown in Figure 4, the electric power P_{ESC} supplied to the electric motor 232 to drive the second compressor 231 preferably substantially is set to be zero at the step S6. Therefore, the electric energy consumption is saved for the overall operating efficiency of the engine 1 when the higher output torque is not needed. Alternatively, the P_{ESC} may be set continuously increase as the desired output from the engine 1 increases

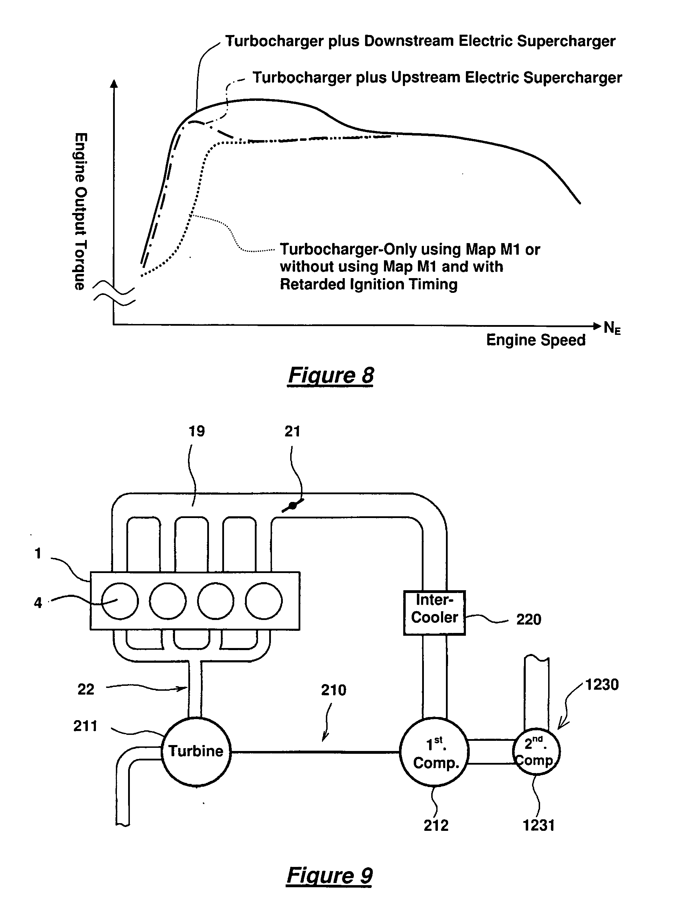

Figure 8 shows maximum torque curves for the first preferred embodiment which has the second compressor 230 preferably downstream of the first compressor as described above, a second preferred embodiment which has a second compressor 1230 upstream of the first compressor 212 as described below with reference to Figure 9, and the first and second comparative examples which only use the turbocharger 210 as described above. The first embodiment shows most favorable torque curve because the electric supercharger 230 is arranged downstream of the turbocharger compressor 212 and can compress the air already compressed by the turbocharger compressor 212 until a relatively higher engine speed. The first comparative example lacks the boost by the electric supercharger 230, and has a reduced maximum torque to that extent. The second comparative example shows the substantially same level of boost as the first embodiment does, but the maximum torque or the fuel economy is deteriorated due to the residual gas caused by the higher exhaust manifold pressure, as described above and shown in Figure 7C.

Figure 9 shows an engine system according to the second embodiment of the present description. The electric supercharger 1230 is arranged upstream of the compressor 212 of the turbocharger 210 rather than downstream of the intercooler 220 as in the first preferred embodiment described above. Any other arrangements and controls are similar or substantially the same as for the first embodiment.

The upstream electric supercharger 1230 compresses atmospheric air and pumps it to the turbocharger compressor 212. Air blew out from the turbocharger 212 contains more heat than that from the electric supercharger 1230 because of heat of the exhaust gas and a greater pressure ratio between the inlet and outlet of the compressor than that of the electric supercharger 1230. Therefore, the arrangement of the electric supercharger 1230 upstream of the turbocharger 1210 may make the function of the electric supercharger 1230 more secure by avoiding the heat transmitted from the turbocharger 212 to the electric supercharger 1230.

Further, the electric motor 232 may be operationally coupled to the first compressor 212 in addition to the turbine 211, and the second compressor 231 or 1231 may be eliminated.

It is needless to say that the invention is not limited to the illustrated embodiments and that various improvements and alternative designs are possible without departing from the substance of the invention as claimed in the attached claims. For example, although in the embodiments, the electric power P_{ESC} to be supplied to the electric motor 232 of the electric supercharger 230 is adjusted based on the P_{ESC} map or table or relationship M2 of Figure 5, alternatively a target intake manifold pressure may be determined from a map or table or relationship for example the intake manifold pressure curve in Figure 7(a), and the electric power P_{ESC} may be feedback controlled based on a difference between the target intake manifold pressure and an actual intake manifold pressure MAP detected by the intake manifold pressure sensor 55.

Accordingly, there is provided a method, system and computer program product for controlling a supercharging system capable of pumping intake air to an internal combustion engine with first and second pumping capacities and having a turbine which receives engine exhaust gas through flow restriction and generates at least the first pumping capacity. The method comprises reducing the flow restriction and increasing the second pumping capacity as a desired intake airflow of the engine increases. By reducing the flow restriction, such as increasing nozzle opening of a variable geometry turbine (VGT), as desired, intake airflow of the engine increases, such as when the engine speed increases, an excessively high pressure in the exhaust passage particularly may be prevented. Therefore, the residual gas in the combustion chamber may be decreased so that the knocking may be prevented without retarding the ignition timing or enriching the air-fuel ratio while more air is charged into the engine. At the substantially same time, by increasing the second pumping, such as increasing electricity supplied to an electric motor to drive a compressor, desired amount of the intake air may be charged into the engine even when the flow restriction is decreased and the turbine efficiency may be decreased accordingly. Consequently, the engine can output more torque without degrading the engine fuel economy.

## Claims

1. A method of controlling a supercharging system (200) capable of pumping intake air to an internal combustion engine (1) with first and second pumping capacities and having a turbine (211) which receives engine exhaust gas through flow restriction (217) and generates at least said first pumping capacity, comprising the step of:
reducing said flow restriction (217) and increasing said second pumping capacity as a desired intake airflow of said engine (1) increases.

2. The method as described in claim 1, wherein said flow restriction (217) is decreased by opening a nozzle (217) arranged upstream of a turbine wheel (213) of said turbine (211).

3. The method as described in claim 2, wherein said nozzle (217) is closed to increase flow rate of the exhaust gas through said turbine wheel (213).

4. The method as described in any one of the preceding claims, wherein a first compressor (212) has said first pumping capacity, said first compressor (212) being driven by said turbine (211) and arranged in an intake passage of said engine (1).

5. The method as described in any one of the preceding claims, wherein said second pumping capacity being generated by an electric motor (232) preferably by means of a second compressor (231), being further preferably arranged in an intake passage of said engine (1).

6. The method as described in claim 5, wherein said second pumping capacity is reduced by decreasing electricity (P_{ESC}) supplied to said electric motor (232).

7. The method as described in any one of the preceding claims, further comprising reducing said flow restriction (217) and increasing said second pumping capacity as a speed (N_{E}) of said engine (1) increases.

8. The method as described in any one of the preceding claims, further comprising increasing said flow restriction (217) as a desired torque of said engine increases.

9. The method as described in any one of the preceding claims, further comprising increasing said second pumping capacity as desired torque of said engine increases.

10. A computer program product comprising computer readable instructions which, when loaded and executed on a suitable system performs the steps of a method for controlling a supercharging system (200) as described in any one of the preceding claims.

11. A supercharging system for an internal combustion engine (1), comprising:
a turbine (211) arranged in an exhaust passage of said engine (1);
a nozzle (217) arranged between said engine (1) and said turbine (211) in said exhaust passage;
an electric power source (233) for an electric motor (232);
a compressor (212, 231, 1231) arranged in an intake air passage of said engine (1) and driven by said turbine (211) and/or said electric motor (232); and
a controller (100), and
wherein said controller (100) controls said nozzle (217) to more open and said electric power source (233) to supply more power to said electric motor (232) as a desired airflow of said engine increases.
